# EUROPEAN PATENT APPLICATION

(11) **EP 2 631 634 A1**
(43) Date of publication of application: **28.08.2013**
(21) Application number: 12162138.7
(22) Date of filing: 29.03.2012
(51) Int. Cl.: G01N 21/95, G02F 1/13

(54) **An optical inspection device**

(30) Priority: 22.02.2012 US 201213402473
(71) Applicant: Kuo Cooper S. K., Taipei 116 (TW)
(72) Inventor: Kuo, Cooper S.K., 116 Taipei (CN); Tsai, Ron, 235 New Taipei City (CN)
(74) Representative: Grünecker, Kinkeldey, Stockmair & Schwanhäusser

(57) **Abstract**

An optical inspection device comprises a first set of rollers, wherein each roller comprises a wheel, and the wheels of the first set of rollers are spaced apart by a first distance in a first direction; a second set of rollers, wherein each roller comprises a wheel, and the wheels of the second set of rollers are spaced apart by the first distance in the first direction; a scanning unit disposed between the first set of rollers and the second set of rollers; and a first image sensor configured to capture optical lights in a first region, wherein the first region is on a side of the first set of rollers opposite the scanning unit.

## Description

### BACKGROUND OF THE INVENTION

The present invention relates generally to an optical inspection device and, more particularly, to an optical inspection device for inspecting defects of an object.

Liquid crystal display (LCD) panels, once manufactured, are subject to inspections for defects. Certain defects, such as bright dot defects, also known as "hot pixels", will always light up when power is supplied to the panel, and thus can be easily detected. Other defects, such as tape automated bonding (TAB) faults, are not as easily detectable, since they would only become visible if pressure were applied to specific point(s) on the LCD panel, and the relationships between each specific point(s) and each defect is not predictable. Furthermore, the latter type of defects generally light up for a very short period of time only.

A conventional optical inspection device for inspecting defects of an object, such as a LCD panel, may generally have one or more sets of rollers for exerting pressure on the object, so that the defects of the object may become visible. The optical inspection device may further have one or more scanning units for scanning the object and obtaining images of the object. The images obtained may subsequently be analyzed by a controller or an individual for determining the total number of defects of the object.

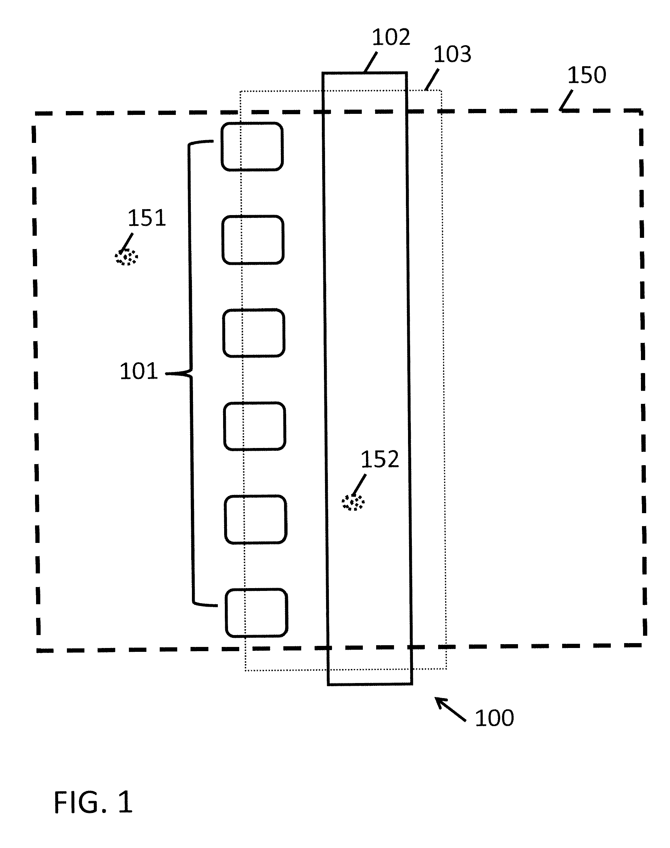

Various optical inspection devices have been designed to optimize the accuracy of the defect inspection process. For example, FIG. 1 is a schematic diagram of a conventional optical inspection device 100 which includes a scanning unit 102 and a set of rollers 101, which is spaced apart in a first direction and disposed on one side of the scanning unit 102. The scanning unit 102 and the set of rollers 101 are held together by a frame 103.

The scanning unit 102 includes a plurality of image sensors (not shown). As the optical inspection device 100 traverses in a direction perpendicular to the first direction and exerts pressure on the object, defects at different locations will, for example, light up, and thus may become visible.

For example, FIG. 1 illustrates that when the set of rollers 101 exerts pressure on the object 150, a first defect 151 and a second defect 152 may become visible. The second defect 152 is located directly underneath the scanning unit 102, and thus, the image of the second defect 152 may be obtained by the image sensors of the scanning unit 102. However, the first defect 151 is not within the imaging range of the scanning unit 102. Therefore, the first defect 151 may not be detected by the optical inspection device 100, unless that defect also lit up when the scanning unit 102 passed above it. As a result, conventional optical inspection devices as such have not been effective. On average, only about 40% of the defects on each object would be detected by such conventional optical inspection device.

### BRIEF SUMMARY OF THE INVENTION

Examples of the present invention may provide an optical inspection device which comprises a first set of rollers, wherein each roller comprises a wheel, and the wheels of the first set of rollers are spaced apart by a first distance in a first direction; a second set of rollers, wherein each roller comprises a wheel, and the wheels of the second set of rollers are spaced apart by the first distance in the first direction; a scanning unit disposed between the first set of rollers and the second set of rollers; and a first image sensor configured to capture optical lights in a first region, wherein the first region is on a side of the first set of rollers opposite the scanning unit.

Other objects, advantages and novel features of the present invention will be drawn from the following detailed embodiments of the present invention with attached drawings.

### BRIEF DESCRIPTION OF THE SEVERAL VIEWS OF THE DRAWINGS

The foregoing summary as well as the following detailed description of the preferred examples of the present invention will be better understood when read in conjunction with the appended drawings. For the purposes of illustrating the invention, there are shown in the drawings examples which are presently preferred. It is understood, however, that the invention is not limited to the precise arrangements and instrumentalities shown. In the drawings:

FIG. 1 is a schematic diagram of a top view of a conventional optical inspection device.

FIG. 2 is a schematic diagram of a top view of an optical inspection device in accordance with an example of the present invention.

FIG. 3 is a schematic diagram of a side view of the optical inspection device illustrated in FIG. 2.

FIG. 4 is a schematic diagram of a top view of an optical inspection device in accordance with another example of the present invention.

FIG. 5 is a schematic diagram of a top view of an optical inspection device in accordance with yet another example of the present invention.

### DETAILED DESCRIPTION OF THE INVENTION

Reference will now be made in detail to the present examples of the invention illustrated in the accompanying drawings. Wherever possible, the same reference numbers will be used throughout the drawings to refer to the same or like portions. It should be noted that the drawings are made in simplified form and are not drawn to precise scale.

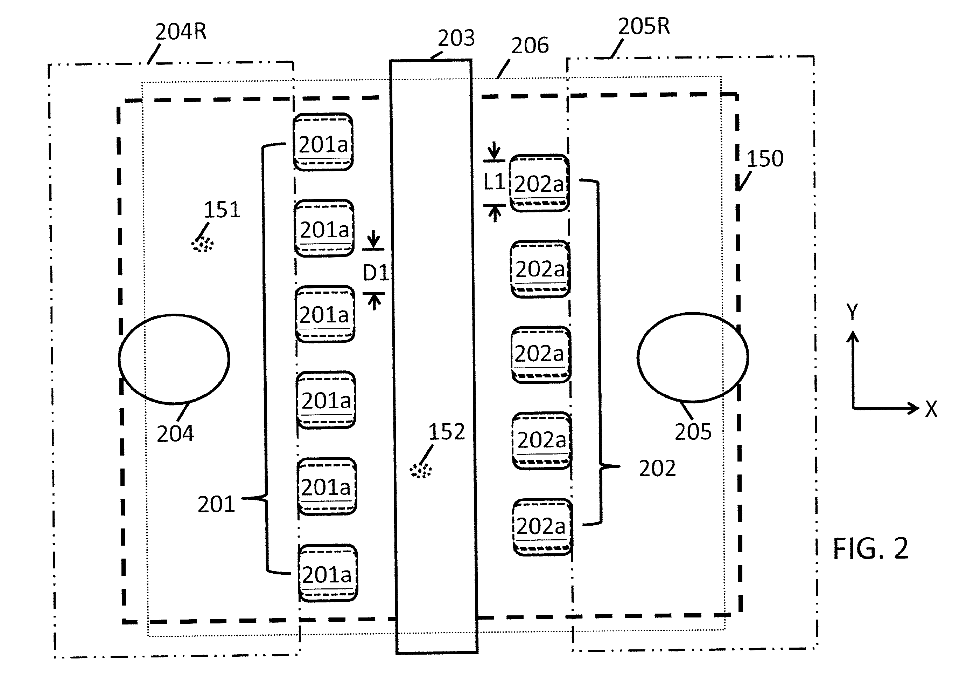

FIG. 2 is a schematic diagram of an optical inspection device 200 in accordance with an example of the present invention. The optical inspection device 200 may include a first set of rollers 201, a second set of rollers 202, a scanning unit 203 disposed between the two sets of rollers, a first image sensor 204 disposed on a side of the first set of rollers 201, opposite the scanning unit 203, and a second image sensor 205 disposed on a side of the second set of rollers 202, opposite the scanning unit 203. The first set of rollers 201, second set of rollers 202, scanning unit 203, first image sensor 204 and second image sensor 205 are held together by a frame 206.

The scanning unit 203 may include a line scanner, which may include a plurality of image sensors (not shown) aligned in one line for capturing light to form images. The image sensors may include, for example, a charge-coupled device (CCD) sensor or a complementary metal-oxide-semiconductor (CMOS) sensor, and are arranged on one side of the scanning unit 203, which will face the object 150 for inspection. In accordance with an example of the present invention, the image sensors include a CMOS sensor, which is capable of capture light to form images in a real-time manner.

The first set of rollers 201 and the second set of rollers 202 are arranged on opposite sides of the scanning unit 203. Each of the rollers 201, 202 may include a wheel 201a, 202a, respectively, which has a length L1 in a first direction Y, and the wheels 201a, 202a in each set of rollers are spaced apart by a predetermined distance D1 in the first direction Y, and are configured to roll in a second direction X, perpendicular to the first direction Y. Furthermore, the second set of rollers 202 has one less roller than the first set of rollers 201, and the first roller of the second set of rollers 202 is offset from the first roller of the first set of rollers 201 by the same predetermined distance D1 in the Y direction. As a result, the two sets of rollers 201 and 202 are staggered with respect to one another to form a zigzag pattern as shown in FIG. 2.

In accordance with the example in FIG. 2, the predetermined distance D1 is equal to the length L1 of the wheel. The zigzag pattern of the rollers has been found to be more effective in causing the unstable defective pixels to become visible. In particular, a comparison between the present invention and an optical inspection device where the rollers are aligned in parallel was carried out. More unstable defective pixels were detected by the optical inspection device of the present invention.

The first image sensor 204 is configured to obtain images in a first region 204R in front of the first set of rollers 201. The first image sensor 204 is an area sensor, which may include, for example, a CCD sensor or a CMOS sensor. In accordance with an example of the present invention, the first image sensor 204 includes a CCD sensor, which is capable of obtaining images in the first region every 0.25 to 0.5 seconds (s). The optical inspection device 200 may further include a second image sensor 205, similar to the first image sensor 204, configured to obtain images in a second region 205R behind the second set of rollers 202.

When an object 150 for inspection passes underneath the optical inspection device 200 in the second direction X, the rollers will press against the surface of the object 105, causing defect(s), if any, to become visible. FIG. 2 illustrates that a first defect 151 and a second defect 152 lit up when the optical inspection device 200 is at the position shown. The first defect 151 is located within the first region 204R, and may be captured by the first image sensor 204 and the second defect 152 may be captured by the scanning unit 203. If any defects exist in the second region 205R, they may be captured by the second image sensor 205. On average, approximately 90-95% of the defects on an object may be detected using the optical inspection device in accordance with the present invention.

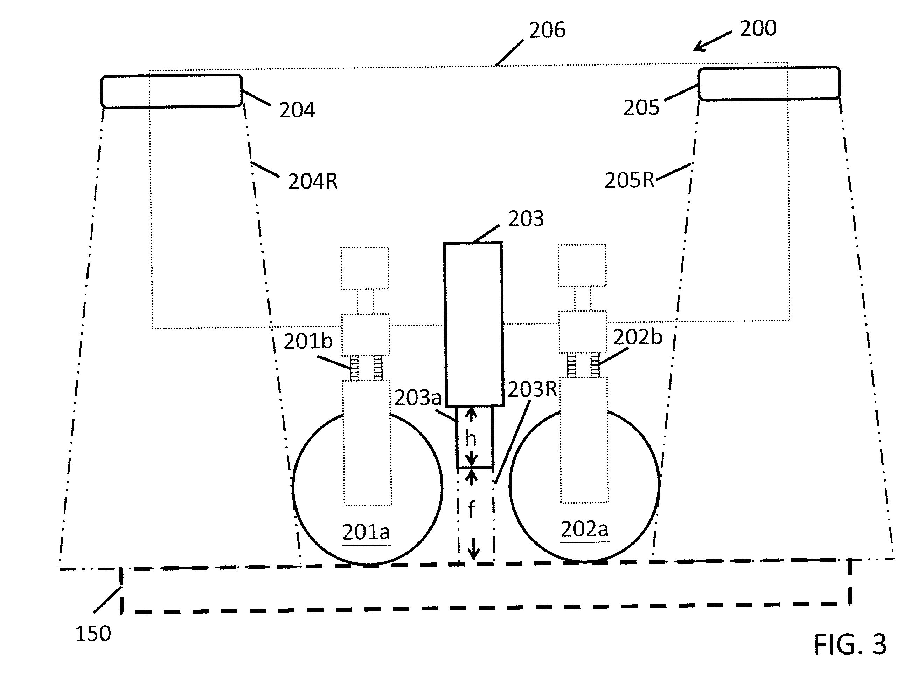

FIG. 3 is a schematic diagram of a side view of the optical inspection device 200 in FIG. 2. As shown in FIG. 3, each of the rollers 201, 202 may include a wheel 201a, 202a, respectively and a spring 201b, 202b, respectively. The rollers are designed so that when pressure is exerted on the surface of the object, the object is not damaged, but the defects may become visible. The diameter of the wheels 201a, 202a may be between 1 to 2.5 centimeters (cm) but can be varied in another examples, and the wheels 201a, 202a may include silicon. Examples of the wheels 201a, 202a in accordance with the examples of the present invention may be but is not limited to 1 cm, 1.5 cm, 2cm or 2.5cm.

The springs 201b, 202b may include high carbon spring steel, and the length of the springs 201b, 202b may be between 15 to 22 millimeter (mm) but can be varied in another examples. The tension of the spring 201b, 202b may be between 100 to 490 kilogram-force (kgf), and the diameter of the spring wire may be between 0.3 to 0.5mm but can be varied in another examples.

As shown in FIG. 3, the plurality of image sensors 203a of the scanning unit 203 has a height h and a focal length f. The maximum diameter of the wheels 201a, 202a is the sum of the height h and the focal length f. The scanning unit 203 and the first set of rollers 201 and second set of rollers 202 are configured such that the wheels 201a, 202a may fit under the scanning unit 203 and closely to the plurality of image sensors 203a, and the image sensors 203a of the scanning unit 203 may obtain images in a third region 203R between the wheels 201a, 202a.

In accordance with an example of the present invention shown in FIG. 3, the first and second set of rollers 201, 202 and the scanning unit 203 are configured such that the two borders of the third region 203R that are parallel to the two sets of rollers 201 and 202 are closest to the points of contact of the respective set of rollers 201, 202 and the object 150.

One skilled in the art will understand that the positions of the first and second set of rollers 201, 202 relative to the image sensors 203a of the scanning unit 203 may be varied. For example, the first and second set of rollers 201 and 202 may be positioned closer or further away from the image sensors 203a of the scanning unit 203, and the third region 203R will widen or narrowed, respectively.

In addition, the positions of the first image sensor 204 and the second image sensor 205 are also adjustable depending on the size of the object to be inspected.

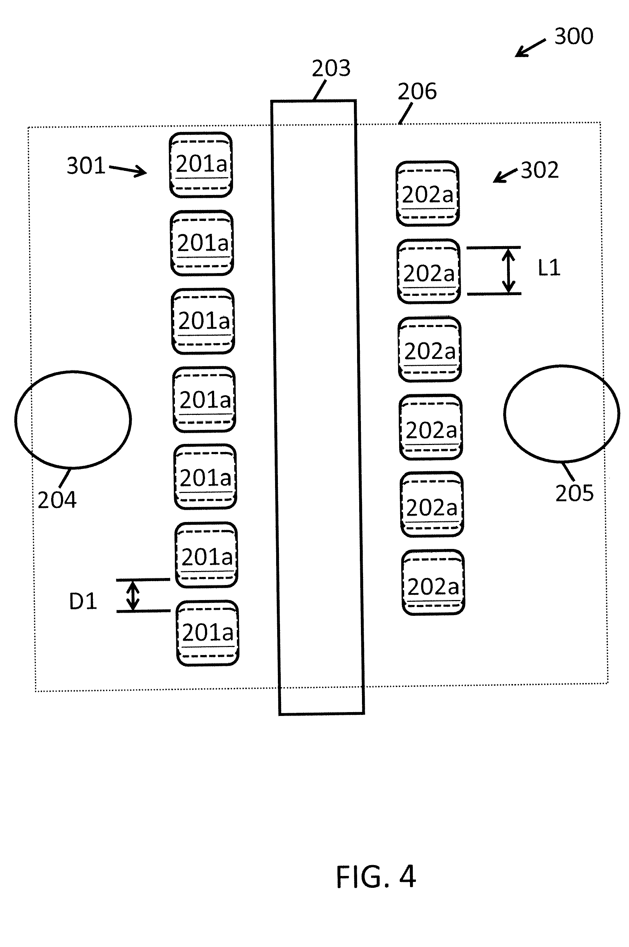

FIG. 4 is a schematic diagram of an optical inspection device 300 in accordance with another example of the present invention. The optical inspection device 300 in FIG. 4 is similar to the optical inspection device 200 in FIG. 2, except that the predetermined distance D1 is less than the length L1 of the wheel.

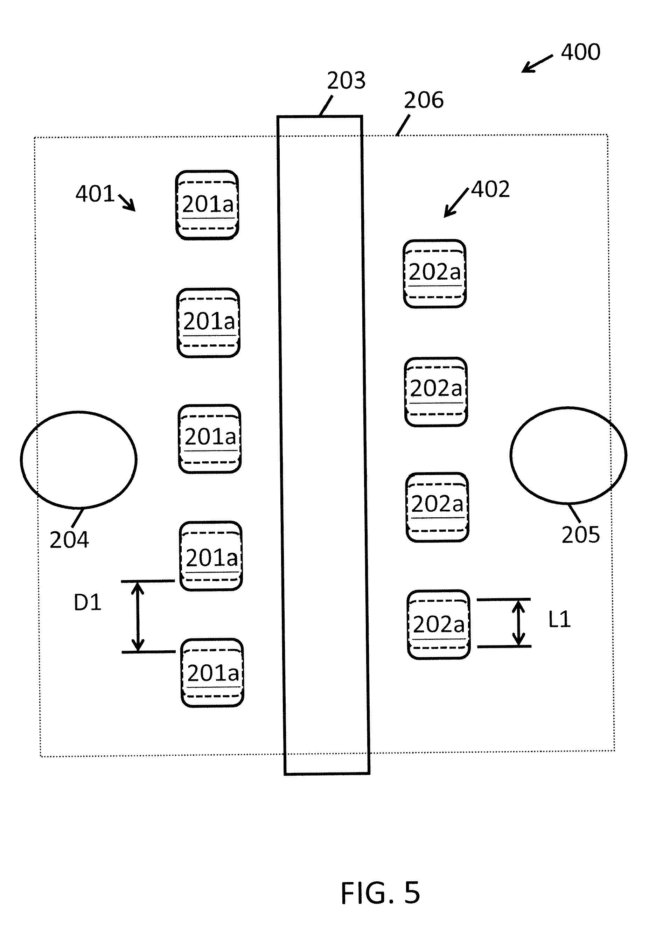

FIG. 5 is a schematic diagram of an optical inspection device 400 in accordance with another example of the present invention. The optical inspection device 400 in FIG. 5 is similar to the optical inspection device 200 in FIG. 2, except that the predetermined distance D1 is greater than the length L1 of the wheel.

In describing representative examples of the present invention, the specification may have presented the method and/or process of operating the present invention as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process of the present invention should not be limited to the performance of their steps in the order written, and one skilled in the art can readily appreciate that the sequences may be varied and still remain within the spirit and scope of the present invention.

It will be appreciated by those skilled in the art that changes could be made to the examples described above without departing from the broad inventive concept thereof. It is understood, therefore, that this invention is not limited to the particular examples disclosed, but it is intended to cover modifications within the spirit and scope of the present invention as defined by the appended claims.

## Claims

1. An optical inspection device comprising:
a first set of rollers, wherein each roller comprises a wheel, and the wheels of the first set of rollers are spaced apart by a first distance in a first direction;
a second set of rollers, wherein each roller comprises a wheel, and the wheels of the second set of rollers are spaced apart by the first distance in the first direction;
a scanning unit disposed between the first set of rollers and the second set of rollers; and
a first image sensor configured to capture optical lights in a first region, wherein the first region is on a side of the first set of rollers opposite the scanning unit.

2. The device of claim 1, further comprising a second image sensor configured to capture optical lights in a second region, wherein the second region is on a side of the second set of rollers opposite the scanning unit.

3. The device of claim 1, wherein the first image sensor and the second image sensor each includes at least a charge-coupled device (CCD) sensor or a complementary metal-oxide-semiconductor (CMOS) sensor.

4. The device of claim 1, wherein the first wheel of the second set of rollers is offset from the first wheel of the first set of rollers by the first distance in the first direction, and wherein each wheel of the second set of rollers is parallel to one space between the wheels of the first set of rollers, forming a staggered pattern with the first set of rollers.

5. The device of claim 1, wherein each wheel has a length in the first direction.

6. The device of claim 5, wherein the first distance is equal to the length.

7. The device of claim 5, wherein the first distance is less than the length.

8. The device of claim 5, wherein the first distance is greater than the length.

9. The device of claim 1, wherein the wheel comprises silicon.

10. The device of claim 1, wherein the diameter of the wheels is between 1 to 2.5 centimeter (cm).

11. The device of claim 1, wherein each roller further comprises at least one spring.

12. The device of claim 11, wherein the at least one spring has a length between 15 to 20 millimeter (mm).

13. The device of claim 11, wherein the tensile strength of the at least one spring is 100 to 490 kilogram-force (kgf).

14. The device of claim 11, wherein the diameter of the spring wire is 0.3 to 0.5mm.

15. The device of claim 1, wherein the scanning unit comprises a plurality of CCD sensors or CMOS sensors.
